# FASCICULE DE BREVET EUROPEEN

(11) **EP 2 575 389 B1**
(45) Date de publication et mention de la délivrance du brevet: **28.08.2019**
(21) Numéro de dépôt: 12185705.6
(22) Date de dépôt: 24.09.2012
(51) Int. Cl.: H04W 8/08, H04W 80/04, H04W 24/04

(54) **PROCEDE POUR FIABILISER LA CONTINUITE DES COMMUNICATIONS OPEREES A PARTIR D'UN TERMINAL MOBILE 4G RELIE A UN RESEAU D'INTERCONNEXION IP**
VERFAHREN ZUR VERBESSERUNG DER ZUVERLÄSSIGKEIT DER KONTINUITÄT DER KOMMUNIKATION EINES 4G-MOBILGERÄTES ÜBER EIN IP-VERBINDUNGSNETZ
METHOD FOR ENHANCING THE CONTINUITY OF COMMUNICATION FROM A 4G MOBILE TERMINAL VIA AN IP INTERCONNECTION NETWORK

(30) Priorité: 30.09.2011 FR 1102965
(43) Date de publication de la demande: 03.04.2013
(73) Titulaire: THALES, 92400 Courbevoie (FR)
(72) Inventeur: Martinez, Natael, 78141 VELIZY Cedex (FR); Mathieu, Christophe, 78141 VELIZY Cedex (FR); KLECH Guillaume, 78141 VELIZY Cedex (FR)
(74) Mandataire: Labatte, Laurent

(56) Documents cités:
- PERKINS C ET AL: "IP Mobility Support for IPv4; RFC 3344", INTERNET ENGINEERING TASK FORCE (IETF), août 2002 (2002-08), XP015009105,
- ALAN O'NEILL ET AL: "Routing and handoff in the edge mobility architecture", ACM MOBILE COMPUTING AND COMMUNICATIONS REVIEW, vol. 4, no. 4, 1 octobre 2000 (2000-10-01) , pages 54-66, XP002433342, ISSN: 1091-1669
- GHOSH AND G VARGHESE R: "Fault-Tolerant Mobile IP", TECHNICAL REPORT WUCS-98-11, WASHINGTON UNIVERSITY,, no. WUCS 98-11, 29 April 1998 (1998-04-29) , pages 1-22, XP007916550,

## Description

La présente invention concerne un procédé pour garantir avec un haut niveau de fiabilité la continuité des communications opérées à partir d'un terminal mobile de quatrième génération (4G) relié à un réseau d'interconnexion de niveau 3, dans la terminologie définie par l'OSI (« Open Systems Interconnection »). L'invention s'applique notamment à la mobilité des terminaux mobiles dans un contexte où les pannes sont peu tolérables, par exemple pour les réseaux utilisés par des forces militaires, des organismes publics, ou des agents civils tels que la police, les pompiers ou la sécurité civile. En particulier, l'invention peut être mise en oeuvre dans des réseaux susceptibles de connaître des ruptures de liens de communication dans le réseau d'interconnexion.

Les réseaux informatiques utilisés par les terminaux mobiles de quatrième génération (4G) comprennent des sous-réseaux radio, parfois désignés par le sigle anglo-saxon RAN pour « Radio Access Network », lesquels sont raccordés à un réseau d'interconnexion, appelé aussi CSN (« Connectivity Service Network »), le CSN pouvant être reliés à Internet. Un terminal mobile de quatrième génération est identifié par une adresse IP (« Internet Protocol ») qui lui permet de recevoir et d'émettre des données à travers l'ensemble du réseau informatique. Le terminal mobile est sous la couverture d'une station antennaire, appelée aussi station de base. Un RAN est formé d'un ensemble de stations de base dont les couvertures se complètent pour couvrir un territoire. Entre le terminal mobile et la station de base, les données sont transmises sous la forme d'ondes radioélectriques puis la station de base transmet les données, généralement via des câbles ou des fibres optiques, à une passerelle faisant interface entre un RAN et un CSN. En règle générale, plusieurs stations de base sont contrôlées par une même station de contrôle. Une telle station de contrôle remplit plusieurs rôles, notamment le filtrage de paquets, la gestion de la qualité de service, l'authentification des d'utilisateurs, le contrôle des stations de base.

Lorsque le terminal mobile se déplace et sort de la zone couverte par une première station de base sous la couverture de laquelle il était situé, les communications sont assurées par une deuxième station de base dont la couverture est adjacente à la première. Si la deuxième station de base est connectée à la même station de contrôle que la première station de base, on parle de micro-mobilité. Dans le cas où le terminal mobile se déplace vers une deuxième station de base qui est connectée à une station de contrôle différente de la première station de contrôle, le terme de macro-mobilité est employé. La présente invention traite plus particulièrement des problèmes de continuité de communications dans le cadre de la macro-mobilité des terminaux mobiles.

Un protocole, appelé MIP pour « Mobile IP », est connu pour gérer la macro-mobilité des terminaux mobiles sur les réseaux WiMax. MIP s'appuie sur les fonctions HA (« Home Agent ») et FA (« Foreign Agent ») qui sont des modules logiciels exécutés par des routeurs au niveau de la couche réseau IP (couche 3). La fonction HA permet de réceptionner et d'orienter des paquets de données destinés au terminal mobile, y compris lorsque celui-ci quitte sa passerelle initiale. La fonction FA est exécutée par un routeur pour relayer les paquets de données jusqu'au terminal mobile. La fonction HA est un point d'ancrage du terminal mobile dans le CSN et ce point d'ancrage demeure tant que le terminal mobile est sous la couverture d'un RAN, quelque soit la station de base à laquelle il est connecté. La fonction HA est généralement exécutée par un routeur unique du CSN et constitue ainsi un point de faiblesse important. Aussi, si un déplacement du terminal mobile entraîne un changement de station de contrôle, et que le routeur exécutant la fonction HA n'est pas atteignable depuis la nouvelle passerelle - par exemple, si plusieurs liens de communication sont coupés -, la communication ne peut être maintenue, malgré les éventuels mécanismes de duplication implémentés. Aussi, bien que le protocole MIP puisse constituer une solution en environnement centralisé, il n'est pas adapté aux réseaux à forte contrainte de fiabilité, tels que par exemple les radios personnelles mobiles ou PMR (« Private Mobile Radio »).

Le document: GHOSH R AND G VARGHESE: "Fault-Tolerant Mobile IP", TECHNICAL REPORT WUCS-98-11, WASHINGTON UNIVERSITY, 29 avril 1998 (1998-04-29), XP007916550, fait partie de l'état de la technique.

Une technique décrite dans la demande française publiée sous le numéro FR2953357 a déjà été proposée pour résoudre les problèmes de macro-mobilité dans un contexte de haute fiabilité. Toutefois, cette technique est moins optimisée lorsque le réseau d'interconnexion fonctionne au niveau de la couche IP, c'est à dire lorsque le réseau utilise des routeurs IP plutôt que des commutateurs Ethernet de niveau 2.

Un but de l'invention est de proposer un procédé fiable pour assurer la continuité de communication d'un terminal mobile évoluant dans un réseau comprenant des stations de contrôle reliées par un réseau d'interconnexion fonctionnant au niveau de la couche 3 du modèle ISO. A cet effet, l'invention a pour objet un procédé pour garantir la continuité des communications opérées à partir d'un terminal mobile de quatrième génération connecté à un réseau radio pourvu de plusieurs stations de base avec lesquelles ledit terminal est apte à communiquer, une station de base étant affiliée à un contrôleur parmi plusieurs contrôleurs reliant ledit réseau radio à un réseau d'interconnexion comportant des routeurs opérant au niveau de la couche IP, au moins un contrôleur étant connecté à au moins une passerelle configurée pour encapsuler dans des paquets IP tous les paquets IP issus du réseau radio avant de les diffuser sur le réseau d'interconnexion, le procédé étant caractérisé en ce qu'il comporte au moins les étapes suivantes :
▪ lorsqu'un terminal mobile se connecte à une station de base affiliée à un contrôleur auquel le terminal mobile n'était pas affilié jusque là, ledit contrôleur transmet vers une passerelle un message de niveau 2 comprenant au moins l'adresse IP du terminal mobile,
▪ ladite passerelle crée, au niveau de la couche IP, un message comprenant l'adresse IP dudit terminal mobile et l'adresse IP de ladite passerelle dans le réseau d'interconnexion,
▪ ledit message IP est diffusé par ladite passerelle vers des passerelles destinataires associées aux autres contrôleurs, chacune desdites passerelles destinataires mémorisant une correspondance entre l'adresse IP du terminal mobile et l'adresse IP de la passerelle émettrice associée au contrôleur auquel le terminal mobile est affilié.

Le procédé selon l'invention permet de mettre à jour en permanence la fonction de gestion de mobilité, qui est distribuée dans tout le réseau. Ainsi, si une station de contrôle devient défaillante, seul le sous-réseau de stations radio devient inopérant, les autres sous-réseaux de stations radio n'étant pas affectés du fait que la fonction de gestion de mobilité est assurée par chaque contrôleur indépendamment les uns des autres. Selon un mode de réalisation, le message de niveau 2 émis par le contrôleur comprend une correspondance entre l'adresse IP du terminal mobile et l'adresse de niveau 2 dudit contrôleur.

Selon une mise en oeuvre du procédé selon l'invention, les passerelles sont accessibles par au moins deux adresses IP différentes, une première adresse IP étant connue des noeuds du réseau radio, une deuxième adresse IP étant connue des noeuds du réseau d'interconnexion, dans lequel tous les paquets IP issus d'un contrôleur sont systématiquement transmis à la passerelle auquel il est associé, ladite passerelle encapsulant lesdits paquets IP dans d'autres paquets IP dont l'adresse IP destinataire est la deuxième adresse d'une passerelle destinataire.

Ainsi dans une communication entre deux terminaux mobiles connectés chacun à une station de base différente, les stations étant affiliées à des contrôleurs différents, tous les paquets de données IP transmis par le premier terminal mobile sont encapsulés par des paquets IP de plus haut niveau dans la passerelle associée au premier contrôleur, ces paquets IP de plus haut niveau étant transmis à la passerelle associée au contrôleur auquel est affilié le deuxième terminal mobile. Les paquets IP sont ensuite désencapsulés, de manière à ce que la passerelle associée au deuxième contrôleur transmette les paquets IP initiaux au deuxième contrôleur, puis au deuxième terminal mobile.

Selon une mise en oeuvre du procédé selon l'invention, chaque contrôleur est connecté à une passerelle propre à ce contrôleur. Cette passerelle permet à la fois d'assurer la fonction de signalisation de la mobilité des terminaux mobiles, et également la fonction d'aiguillage des données IP transitant par le réseau d'interconnexion.

Selon une mise en oeuvre du procédé selon l'invention, chaque passerelle est connectée au contrôleur auprès duquel elle est localisée par l'intermédiaire d'au moins un routeur IP compris dans le réseau d'interconnexion, ledit routeur étant configuré pour aiguiller systématiquement tous les paquets IP ou messages de niveau 2 vers ladite passerelle, préalablement à leur encapsulation et diffusion dans le réseau d'interconnexion.

Selon une mise en oeuvre du procédé selon l'invention, après l'étape d'encapsulation, tous les paquets issus d'une première passerelle connectée à un premier contrôleur transitent via le réseau d'interconnexion puis sont transmis vers une deuxième passerelle connectée à un deuxième contrôleur, cette deuxième passerelle retirant la capsule IP ajoutée aux paquets IP par IIa première passerelle avant de transmettre lesdits paquets IP vers le deuxième contrôleur.

Selon une mise en oeuvre du procédé selon l'invention, la première adresse IP connue des noeuds du réseau radio est la même pour toutes les passerelles. La présence de ces deux adresses IP permet au terminal mobile de ne conserver qu'une seule adresse IP.

Selon une mise en oeuvre du procédé selon l'invention, lorsqu'un routeur émet une requête ARP vers le réseau d'interconnexion, le premier routeur du réseau d'interconnexion recevant ladite requête la transmet à une passerelle, ladite passerelle transmettant une réponse au dit routeur, la réponse comprenant l'adresse de niveau 2 de ladite passerelle.

L'invention a également pour objet un système pour garantir la continuité des communications opérées à partir d'un terminal mobile de quatrième génération connecté à un réseau radio pourvu de plusieurs stations de base avec lesquelles ledit terminal est apte à communiquer, ledit réseau radio étant relié par des contrôleurs à un réseau d'interconnexion comportant des routeurs opérant au niveau de la couche IP, caractérisé en ce que chaque contrôleur est connecté à au moins une passerelle configurées pour encapsuler dans des paquets IP tous les paquets IP issus du réseau radio avant de les diffuser sur le réseau d'interconnexion.

Selon un mode de réalisation du système selon l'invention, au moins une passerelle est connectée via un bus de données au contrôleur auquel elle est associée.

Selon un mode de réalisation du système selon l'invention, au moins une passerelle est connectée par l'intermédiaire d'au moins un routeur au contrôleur auquel elle est associée.

D'autres caractéristiques apparaîtront à la lecture de la description détaillée donnée à titre d'exemple et non limitative qui suit faite en regard de dessins annexés qui représentent :
- la figure 1, un schéma présentant un exemple de réseau sur lequel le procédé selon l'invention peut être mis en oeuvre ;
- la figure 2, un schéma illustrant un exemple de chemin pris par des données dans un réseau dans lequel le procédé selon l'invention est mis en oeuvre ;
- la figure 3, un exemple de macro-mobilité prise en charge grâce au procédé selon l'invention.

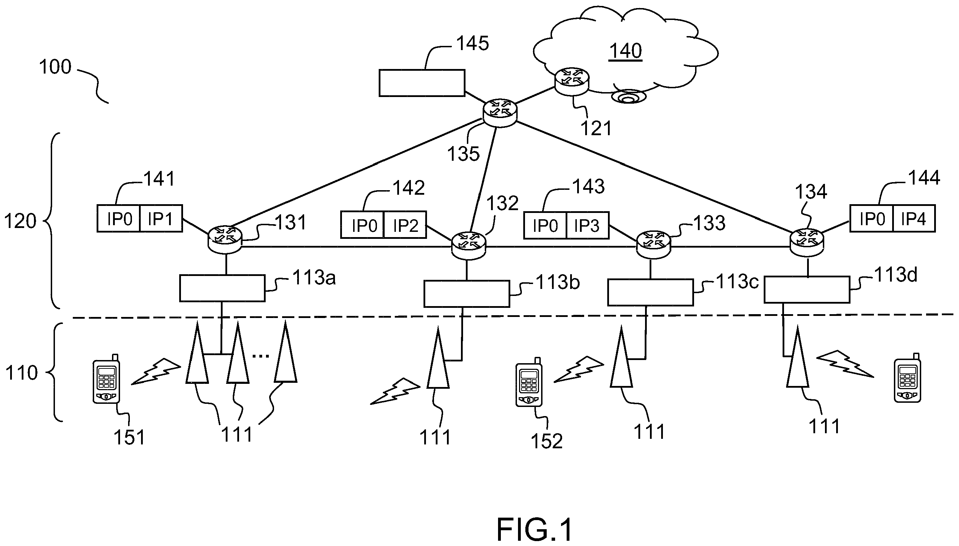

La figure 1 est une vue présentant un exemple de réseau sur lequel le procédé selon l'invention peut être mis en oeuvre. Un réseau de communications 4G 100 comprend un réseau radio 110 appelé RAN par la suite, et un réseau d'interconnexion 120 formé, par exemple, de liens de communications câblés ou de liens radio par faisceau hertzien ou autres. Dans l'exemple, le réseau d'interconnexion 120 est relié au réseau Internet 140 par l'intermédiaire d'un routeur 121. Le RAN 110 comprend plusieurs stations de base radio 111 réparties pour couvrir un territoire. Ainsi, le réseau de communications 4G 100 permet à des terminaux mobiles 151 présents sur ce territoire de communiquer avec d'autres terminaux 152 connectés au réseau 4G 100 via d'autres stations de base. Un terminal mobile 151, 152 est, par exemple, un téléphone, un ordinateur portable ou tout autre appareil nomade apte à communiquer via le réseau 4G 100.

Plusieurs contrôleurs 113a, 113b, 113c, 113d de stations de base radio, aussi appelés plus simplement « contrôleurs » par la suite, permettent notamment de gérer les problèmes de macro-mobilité des terminaux mobiles, la qualité de service, et l'authentification des d'utilisateurs. Chacun de ces contrôleurs 113a, 113b, 113c, 113d contrôle une ou plusieurs stations de base radio 111. Les fonctions traditionnellement dévolues au «Home agent » dans le cas de l'utilisation du protocole MIP (Mobile IP) sont, dans le cadre de l'invention, distribuées au niveau des contrôleurs de base 113a, 113b, 113c, notamment pour éviter la vulnérabilité d'un système centralisé. En outre, les contrôleurs 113a, 113b, 113c, 113d sont reliés entre eux par un réseau de routeurs 131, 132, 133, 134, 135 fonctionnant au niveau de la couche IP.

Aussi, lorsqu'un nouveau terminal mobile 151 se connecte à une station de base 111 affiliée à un contrôleur 113a auquel ce terminal 151 n'était jusque là pas affilié - autrement dit, le terminal mobile n'était pas connecté à une station de base affiliée à ce contrôleur 113a -, les autres contrôleurs 113b, 113c, 113d doivent être avertis de l'arrivée du nouveau terminal mobile 151. Dans l'exemple, le contrôleur 113a est conçu pour être raccordé à un réseau d'interconnexion comprenant des commutateurs opérant au niveau 2 de la couche ISO, bien que dans l'invention, ce contrôleur soit raccordé, à un réseau de routeurs 131, 132, 133, 134, 135 opérant au niveau 3. Le contrôleur de base 113a auquel est affilié le nouveau terminal mobile 151 est configuré pour émettre un message pour avertir les autres contrôleurs 113b, 113c, 113d de l'arrivée du terminal mobile 151. Selon un mode de mise en oeuvre du procédé selon l'invention, le message est de type « Gratuitous ARP » ou GARP. Ce message comprend l'adresse IP du terminal mobile et l'adresse de niveau 2 du contrôleur 113a, qui dans le cas d'un réseau Ethernet est une adresse MAC. Dans la mise en oeuvre de l'invention, le réseau d'interconnexion 120 étant de niveau 3, le réseau ne peut pas propager le message GARP automatiquement vers les autres contrôleurs 113b, 113c, 113d. Pour permettre la propagation de ce message, des passerelles 141, 142, 143, 144 fonctionnant au niveau de la couche IP sont placées en interface entre chaque contrôleur 113a, 113b, 113c, 113d et le réseau d'interconnexion 120. La passerelle 141, 142, 143, 144 est accessible au contrôleur 113a, 113b, 113c, 113d via un ou plusieurs routeurs 131, 132, 133, 134 du réseau d'interconnexion 120. Le message GARP émis par le contrôleur 113a auprès duquel le terminal mobile est nouvellement affilié est redirigé vers la passerelle 141 qui est associée à ce contrôleur 113a. Ce message GARP de niveau 2 peut ainsi être traité par la passerelle 141 associée au contrôleur de base 113a auquel est affilié le nouveau terminal mobile 151. La passerelle 141 exploite de message de niveau 2 pour créer un message IP afin d'alerter les autres passerelles 142, 143, 144 de l'arrivée d'un nouveau terminal mobile 151 sur le contrôleur 113a associé à cette passerelle 141. Le message IP est se propage à travers le réseau d'interconnexion 120 pour atteindre les autres passerelles 142, 143, 144, lesquelles mémorisent une correspondance entre l'adresse IP du terminal mobile et l'adresse IP de la passerelle 141 auprès de laquelle le contrôleur 113a du terminal mobile est affilié. Ainsi, il n'est pas nécessaire d'alerter directement les autres contrôleurs 113b, 113c, 113d de l'arrivée d'un nouveau terminal mobile 151 affilié au premier contrôleur 113a. Ce sont les passerelles 141, 142, 143, 144 qui maintiennent cette information nécessaire à une bonne gestion de la macro-mobilité des terminaux 151. Dans le cas d'un déplacement d'un terminal mobile précédemment affilié à un premier contrôleur vers une station de base affiliée à un autre contrôleur, la correspondance, maintenue par chacune des passerelles 141, 142, 143, 144, entre l'adresse IP du terminal mobile et l'adresse IP de la passerelle associée au contrôleur auquel est affilié ce terminal mobile est modifiée par chacune des passerelles 141, 142, 143, 144. En effet, l'adresse IP de la passerelle initiale est remplacée par l'adresse IP de la nouvelle passerelle. Les passerelles jouent dans ce cadre un rôle dans la signalisation de la mobilité des terminaux.

Les terminaux mobiles 151, 152 connectés au réseau d'interconnexion 120 via les stations de base radio 111 et les contrôleurs 113a, 113b, 113c, 113d appartiennent au même sous-réseau IP, de sorte qu'une fois qu'un terminal mobile a été déclaré auprès du réseau 4G 100, et qu'une adresse IP lui a été attribuée, cette adresse IP ne change pas, même en cas de macro-mobilité de ce terminal.

Pour permettre aux terminaux mobiles de passer d'un contrôleur à l'autre sans changer d'adresse IP et sans perturber les communications, tous les paquets IP de données transmis à travers un contrôleur 113a, 113b, 113c, 113d à destination d'un autre contrôleur 113a, 113b, 113c, 113d sont systématiquement encapsulés dans d'autres paquets IP pour pouvoir être propagés par les routeurs 131, 132, 133, 134, 135 du réseau d'interconnexion 120. Une adresse IP connue du réseau d'interconnexion 120 est attribuée aux paquets IP encapsulant les paquets IP de données, de manière à les router correctement jusqu'au contrôleur destinataire, c'est-à-dire jusqu'au contrôleur chargé de transmettre les paquets à la station de base à laquelle le terminal mobile destinataire est connecté. La capsule IP qui avait été ajoutée avant le routage dans le réseau d'interconnexion est ensuite retirée au niveau de ce contrôleur destinataire, plus exactement par la passerelle associée à ce contrôleur destinataire.

Ce mécanisme d'encapsulation IP dans IP est avantageusement mis en oeuvre par une passerelle 141, 142, 143, 144 telle que décrite plus haut, une passerelle étant préférablement mise en place pour chaque contrôleur 113a, 113b, 113c, 113d. Une passerelle peut être vue, pour le traitement des données IP, comme des moyens d'encapsulation de paquets IP dans d'autres paquets IP de plus haut niveau. Deux adresses IP sont attribuées à chacune des passerelles 141, 142, 143, 144: une première adresse IP vue du réseau radio 110, et une deuxième adresse IP vue du réseau d'interconnexion 120. La première adresse IP, vue du réseau radio 110, est toujours la même, quelle que soit la passerelle 141, 142, 143, 144, autrement dit, toutes les passerelles ont la même première adresse IP, qui dans la figure 1 est désignée par « IP0 ». La deuxième adresse IP, propre à chaque passerelle, permet l'adressage des données au sein du réseau d'interconnexion 120.

Dans l'exemple de la figure 1, un routeur 131, 132, 133, 134 est en interface entre chaque contrôleur 113a, 113b, 113c, 113d et la passerelle 141, 142, 143, 144 auquel il est associé. Ce routeur 131, 132, 133, 134 est configuré pour transférer systématiquement tous les paquets reçus du contrôleur auquel il est connecté vers la passerelle associée. Tous les paquets entrant dans le réseau d'interconnexion 120 via un contrôleur 113a, 113b, 113c, 113d sont donc transmis vers la passerelle associée à ce contrôleur, de manière à effectuer l'encapsulation IP dans IP décrite plus haut.

Avantageusement, une passerelle 141 est co-localisée avec le routeur auquel elle est associée 113a. Selon un mode de mise en oeuvre du procédé selon l'invention, le contrôleur et la passerelle sont physiquement intégrés dans la même machine, la passerelle étant par exemple connectée au contrôleur par un câble réseau ou un bus de données.

En outre, certaines passerelles 145 du réseau d'interconnexion 120 peuvent recevoir des requêtes de type ARP (Address Resolution Protocol) émises à partir de routeurs externes 121 à ce réseau d'interconnexion 120. Ces requêtes proviennent, par exemple, de routeurs externes 121 chargés de déterminer quelle est l'adresse MAC dans le réseau d'interconnexion 120 qui correspond à une adresse IP déterminée. Ces passerelles 145 sont configurées pour répondre avec leurs propres adresses MAC, autrement dit, indiquer aux routeurs externes 121 que quelle que soit l'adresse IP spécifiée dont on cherche le correspondant de niveau 2, c'est la passerelle 145 qui doit recevoir tous les paquets pour procéder à une encapsulation IP dans IP telle que décrite plus haut puis les orienter vers les bonnes passerelles du réseau.

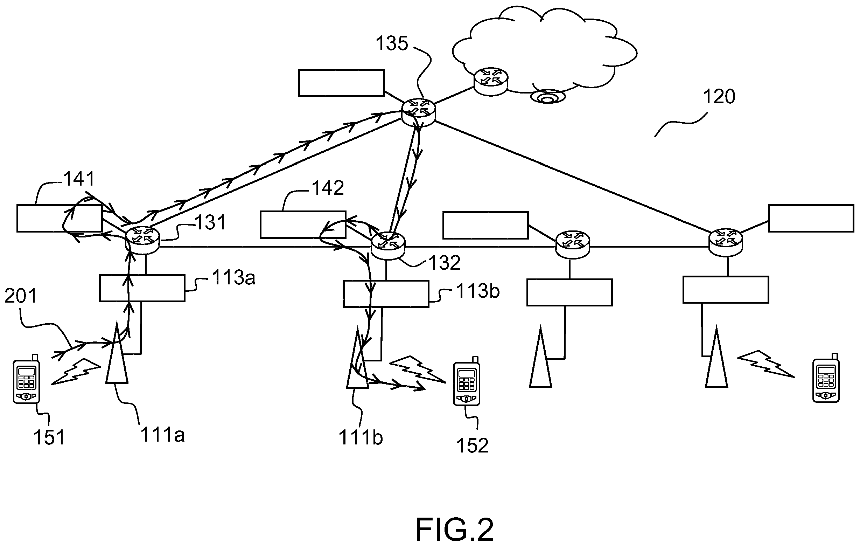

La figure 2 illustre par un schéma un exemple de chemin pris par des données dans un réseau dans lequel le procédé selon l'invention est mis en oeuvre. La figure illustre par un trait fléché un chemin 201 emprunté par des données entre un premier terminal mobile 151 et un deuxième terminal mobile 152, les terminaux mobiles 151, 152 ayant été préalablement enregistrés auprès des contrôleurs 113a, 113b.

Les données IP issues du premier terminal mobile 151 sont transmises à une station de base 111a, puis au premier contrôleur 113a en interface avec le réseau d'interconnexion 120. Un routeur 131 du réseau d'interconnexion reçoit les données ; il est configuré pour orienter les paquets de données automatiquement vers la première passerelle 141. Cette passerelle 141, qui comporte deux adresses IP comme décrit plus haut, encapsule les paquets de données IP dans d'autres paquets IP de plus haut niveau. L'adresse IP destinataire dans le réseau d'interconnexion 120 qui est attribuée aux paquets IP de plus haut niveau est l'adresse IP de la passerelle destinataire 142 vue du réseau d'interconnexion 120. Les paquets IP de plus haut niveau sont ainsi routés à travers le réseau d'interconnexion 120 jusqu'à la passerelle destinataire 142, laquelle décode les paquets de données IP encapsulés précédemment, et les transmet au deuxième contrôleur 113b. Les données IP sont ensuite transmises à une station de base 111b puis au deuxième terminal mobile 152.

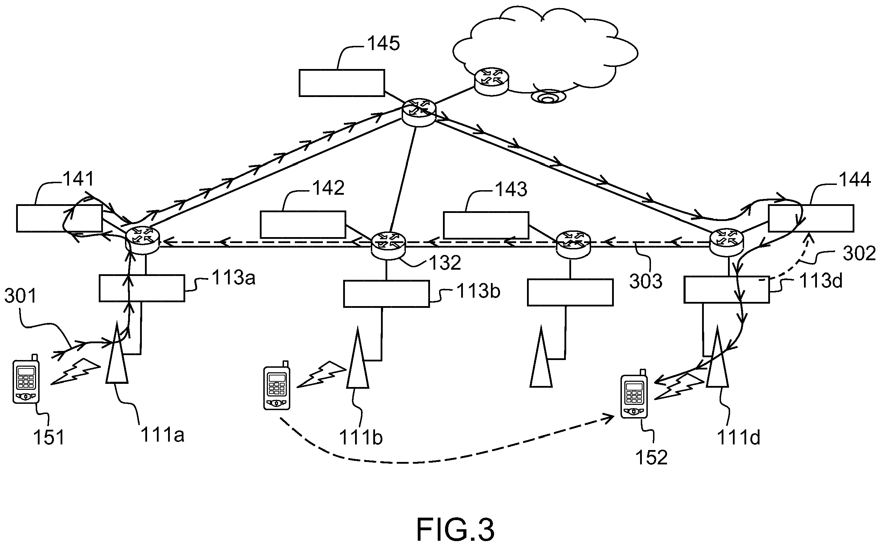

La figure 3 illustre un exemple de macro-mobilité prise en charge grâce au procédé selon l'invention. L'exemple de la figure 3 reprend le réseau de la figure 2, dans lequel deux terminaux mobiles 151, 152 communiquent.

Le deuxième terminal 152 s'éloigne de la station de base 111b auquel il était connecté, jusqu'à se connecter à une station de base 111d affiliée à un troisième contrôleur 113d différent du précédent. Le deuxième terminal mobile 152 est détecté par le troisième contrôleur 113d. Un message 302 de niveau 2 est émis par ce troisième contrôleur 113d vers la passerelle 144 auquel il est associé, laquelle passerelle émet un message IP 303 (représenté en pointillés sur la figure 3) à destination des autres passerelles 141, 142, 143 pour les avertir du déplacement du terminal mobile 152. Les tables de correspondances maintenues par les passerelles 141, 142, 143 sont mises à jour, de sorte que les paquets IP destinés au terminal mobile 152 sont bien acheminés vers la passerelle 144 associée au nouveau contrôleur 113d auquel le deuxième terminal mobile 152 est affilié.

Le chemin 301 emprunté par des données entre le premier terminal mobile 151 et le deuxième terminal mobile 152 après macro-mobilité est illustré par un trait plein fléché.

Si un ou plusieurs liens de communication sont coupés, alors le caractère maillé du réseau et le fait que chaque passerelle ait directement accès aux correspondances entre adresses IP des terminaux mobiles et adresses IP des passerelles auprès desquelles ils sont affiliés permet d'assurer l'acheminement des données correctement. La fonction de gestion de la mobilité est décentralisée.

Un avantage du procédé selon l'invention est qu'il permet de réutiliser des contrôleurs initialement prévus pour fonctionner au niveau 2 de la couche ISO. On peut ainsi réaliser un réseau 4G fiable sur la base d'un réseau d'interconnexion de niveau 3. Le procédé selon l'invention ne nécessite pas la mise en oeuvre de fonctionnalités particulières sur les terminaux mobiles. Des terminaux mobiles standards peuvent donc bénéficier de l'invention. Enfin, le procédé selon l'invention est compatible avec les solutions de routage IP classiques et ne s'appuie que sur des fonctions implémentées dans les contrôleurs entre le réseau d'accès radio et le réseau d'interconnexion.

## Revendications

1. Procédé pour garantir la continuité des communications opérées à partir d'un terminal mobile (151, 152) de quatrième génération connecté à un réseau radio (110) pourvu de plusieurs stations de base (111) avec lesquelles ledit terminal (151, 152) est apte à communiquer, une station de base (111a) étant affiliée à un contrôleur (113a) parmi plusieurs contrôleurs (113a, 113b, 113c, 113d) reliant ledit réseau radio (110) à un réseau d'interconnexion (120) comportant des routeurs (131, 132, 133, 134, 135) opérant au niveau de la couche IP, au moins un contrôleur étant connecté à au moins une passerelle configurée pour encapsuler dans des paquets IP tous les paquets IP issus du réseau radio avant de les diffuser sur le réseau d'interconnexion, lesdites passerelles (141, 142, 143, 144, 145) étant accessibles par au moins deux adresses IP différentes, une première adresse IP étant connue des noeuds (111) du réseau radio (110), une deuxième adresse IP étant connue des noeuds (131, 132, 133, 134, 135) du réseau d'interconnexion (120),
et en ce que, lorsqu'un premier terminal mobile (151) se connecte à une première station de base (111a) affiliée à un premier contrôleur (113a) auquel ledit premier terminal mobile n'était pas affilié jusque là, il comprend les étapes suivantes :
• ledit premier contrôleur (113a) transmet vers une première passerelle (141) un message de niveau 2 comprenant au moins l'adresse IP du premier terminal mobile (151),
▪ ladite première passerelle (141) crée, au niveau de la couche IP, un message comprenant l'adresse IP dudit premier terminal mobile (151) et ladite deuxième adresse IP de ladite première passerelle (141) dans le réseau d'interconnexion (120),
▪ ledit message IP est diffusé par ladite première passerelle (141) vers des passerelles destinataires (142, 143, 144) associées aux autres contrôleurs (113b, 113c, 113d), chacune desdites passerelles destinataires mémorisant une correspondance entre l'adresse IP du premier terminal mobile (151) et ladite deuxième adresse IP de ladite première passerelle émettrice (141) associée au premier contrôleur (113a) auquel le premier terminal mobile (151) est affilié,
et en ce que les paquets IP issus d'un contrôleur (113a) sont systématiquement transmis à la passerelle (141) auquel il est associé, ladite passerelle encapsulant lesdits paquets IP dans d'autres paquets IP dont l'adresse IP destinataire est la deuxième adresse d'une passerelle destinataire.

2. Procédé selon la revendication 1, dans lequel chaque contrôleur (113a, 113b, 113c, 113d) est connecté à une passerelle (141, 142, 143, 144, 145) propre à ce contrôleur.

3. Procédé selon la revendication 2, dans lequel chaque passerelle (141) est connectée au contrôleur (113a) auprès duquel elle est localisée par l'intermédiaire d'au moins un routeur IP (131) compris dans le réseau d'interconnexion (120), ledit routeur (131) étant configuré pour aiguiller systématiquement tous les paquets IP ou messages de niveau 2 vers ladite passerelle (141), préalablement à leur encapsulation et diffusion dans le réseau d'interconnexion (120).

4. Procédé selon l'une des revendications précédentes, dans lequel, après l'étape d'encapsulation, tous les paquets issus d'une première passerelle (141) connectée à un premier contrôleur (113a) transitent via le réseau d'interconnexion (120) puis sont transmis vers une deuxième passerelle (142) connectée à un deuxième contrôleur (113b), cette deuxième passerelle (142) retirant la capsule IP ajoutée aux paquets IP par IIa première passerelle avant de transmettre lesdits paquets IP vers le deuxième contrôleur (113b).

5. Procédé selon l'une quelconque des revendications précédentes, dans lequel la première adresse IP connue des noeuds (111) du réseau radio (110) est la même pour toutes les passerelles.

6. Procédé selon l'une quelconque des revendications précédentes, dans lequel, lorsqu'un routeur (121) émet une requête ARP vers le réseau d'interconnexion (120), le premier routeur (135) du réseau d'interconnexion (120) recevant ladite requête la transmet à une passerelle (145), ladite passerelle transmettant une réponse au dit routeur (121), la réponse comprenant l'adresse de niveau 2 de ladite passerelle (145).

7. Système pour garantir la continuité des communications opérées à partir d'un terminal mobile (151, 152) de quatrième génération connecté à un réseau radio (110) pourvu de plusieurs stations de base (111) avec lesquelles ledit terminal (151, 152) est apte à communiquer, une station de base (111a) étant affiliée à un contrôleur (113a) parmi plusieurs contrôleurs (113a, 113b, 113c, 113d) reliant ledit réseau radio (110) à un réseau d'interconnexion (120) comportant des routeurs (131, 132, 133, 134, 135) opérant au niveau de la couche IP, au moins un contrôleur (113a, 113b, 113c, 113d) étant connecté à au moins une passerelle (141, 142, 143, 144) configurée pour encapsuler dans des paquets IP tous les paquets IP issus du réseau radio (110) avant de les diffuser sur le réseau d'interconnexion (120), ledit système permettant la mise en oeuvre du procédé selon l'une des revendications 1 à 6.

8. Système selon la revendication 7, dans lequel au moins une passerelle (141, 142, 143, 144, 145) est connectée via un bus de données au contrôleur (113a, 113b, 113c, 113d) auquel elle est associée.

9. Système selon la revendication 7, dans lequel au moins une passerelle (141, 142, 143, 144) est connectée par l'intermédiaire d'au moins un routeur (131, 132, 133, 134) au contrôleur (113a, 113b, 113c, 113d) auquel elle est associée.

10. Procédé selon la revendication 1, dans lequel ledit message de niveau 2 transmis par le premier contrôleur vers la première passerelle est un message de type GARP.

## Patentansprüche

1. Verfahren zum Gewährleisten der Durchgängigkeit der Kommunikationen, welche von einem mobilen Endgerät (151, 152) vierter Generation aus vorgenommen werden, welches mit einem Funknetz (110) verbunden ist, welches mit mehreren Basisstationen (111) versehen ist, mit welchen das Endgerät (151, 152) zu kommunizieren in der Lage ist, wobei eine Basisstation (111a) einem Steuergerät (113a) unter mehreren Steuergeräten (113a, 113b, 113c, 113d) angegliedert ist, welche das Funknetz (110) mit einem Verbindungsnetz (120) verbinden, welches Router (131, 132, 133, 134, 135) beinhaltet, welche auf der Ebene der IP-Schicht arbeiten, wobei mindestens ein Steuergerät mit mindestens einem Gateway verbunden ist, welches konfiguriert ist, um alle aus dem Funknetz stammenden IP-Pakete in IP-Paketen zu verkapseln, bevor es diese auf dem Verbindungsnetz ausstrahlt, wobei die Gateways (141, 142, 143, 144, 145) über mindestens zwei unterschiedliche IP-Adressen zugänglich sind, wobei eine erste IP-Adresse den Knoten (111) des Funknetzes (110) bekannt ist, wobei eine zweite IP-Adresse den Knoten (131, 132, 133, 134, 135) des Verbindungsnetzes (120) bekannt ist,
und dadurch, dass, wenn ein erstes mobiles Endgerät (151) sich mit einer ersten Basisstation (111a) verbindet, welche einem ersten Steuergerät (113a) angegliedert ist, welchem das erste mobile Endgerät bis dahin nicht angegliedert war, das Verfahren folgende Schritte beinhaltet:
▪ Das erste Steuergerät (113a) überträgt an ein erstes Gateway (141) eine Meldung der Stufe 2, welche mindestens die IP-Adresse des ersten mobilen Endgerätes (151) enthält,
▪ Das erste Gateway (141) erzeugt auf der Ebene der IP-Schicht eine Meldung, welche die IP-Adresse des ersten mobilen Endgerätes (151) und die zweite IP-Adresse des ersten Gateways (141) im Verbindungsnetz (120) enthält,
▪ Die IP-Meldung wird über das erste Gateway (141) an die Empfänger-Gateways (142, 143, 144), welche den anderen Steuergeräten (113b, 113c, 113d) zugeordnet sind, ausgestrahlt, wobei jedes der Empfänger-Gateways eine Entsprechung zwischen der IP-Adresse des ersten Endgerätes (151) und der zweiten IP-Adresse des ersten Sende-Gateways (141), welches dem ersten Steuergerät (113a) zugeordnet ist, welchem das erste mobile Endgerät (151) angegliedert ist, speichert,
und dadurch, dass die von einem Steuergerät (113a) stammenden IP-Pakete systematisch an dasjenige Gateway (141) übertragen werden, das ihm zugeordnet ist, wobei das Gateway die IP-Pakete in anderen IP-Paketen verkapselt, deren IP-Empfängeradresse die zweite Adresse eines Empfänger-Gateways ist.

2. Verfahren nach Anspruch 1, bei welchem jedes Steuergerät (113a, 113b, 113c, 113d) mit einem diesem Steuergerät spezifischen Gateway (141, 142, 143, 144, 145) verbunden ist.

3. Verfahren nach Anspruch 2, bei welchem jedes Gateway (141) mit demjenigen Steuergerät (113a) verbunden ist, bei welchem es lokalisiert ist, in Vermittlung mindestens eines IP-Routers (131), welcher in dem Verbindungsnetz (120) enthalten ist, wobei der Router (131) konfiguriert ist, um systematisch alle IP-Pakete oder Meldungen der Stufe 2 an das Gateway (141), vor deren Verkapselung und Ausstrahlung im Verbindungsnetz (120) zu leiten.

4. Verfahren nach einem der vorhergehenden Ansprüche, bei welchem, nach dem Schritt des Verkapselns, alle aus einem ersten Gateway (141), welches mit einem ersten Steuergerät (113a) verbunden ist, stammenden Pakete über das Verbindungsnetz (120) passieren und anschließend an ein zweites Gateway (142) übertragen werden, welches mit einem zweiten Steuergerät (113b) verbunden ist, wobei das zweite Gateway (142) die den IP-Paketen durch das erste Gateway hinzugefügte IP-Kapsel entfernt, bevor es die IP-Pakete an das zweite Steuergerät (113b) überträgt.

5. Verfahren nach einem der vorhergehenden Ansprüche, bei welchem die erste IP-Adresse, welche den Knoten (111) des Funknetzes (110) bekannt ist, dieselbe für alle Gateways ist.

6. Verfahren nach einem der vorhergehenden Ansprüche, bei welchem, wenn ein Router (121) eine ARP-Anfrage an das Verbindungsnetz (120) sendet, der erste Router (135) des Verbindungsnetzes (120), welches die Anfrage empfängt, sie an ein Gateway (145) überträgt, wobei das Gateway eine Antwort an den Router (121) überträgt, wobei die Antwort die Adresse der Stufe 2 des Gateways (145) enthält.

7. System zum Gewährleisten der Durchgängigkeit der Kommunikationen, welche von einem mobilen Endgerät (151, 152) vierter Generation aus vorgenommen werden, welches mit einem Funknetz (110) verbunden ist, welches mit mehreren Basisstationen (111) versehen ist, mit welchen das Endgerät (151, 152) zu kommunizieren in der Lage ist, wobei eine Basisstation (111a) einem Steuergerät (113a) unter mehreren Steuergeräten (113a, 113b, 113c, 113d) angegliedert ist, welche das Funknetz (110) mit einem Verbindungsnetz (120) verbinden, welches Router (131, 132, 133, 134, 135) beinhaltet, welche auf der Ebene der IP-Schicht arbeiten, wobei mindestens ein Steuergerät (113a, 113b, 113c, 113d) mit mindestens einem Gateway (141, 142, 143, 144) verbunden ist, welches konfiguriert ist, um alle aus dem Funknetz (110) stammenden IP-Pakete in IP-Paketen zu verkapseln, bevor es diese auf dem Verbindungsnetz (120) ausstrahlt, wobei das System die Umsetzung des Verfahrens nach einem der Ansprüche 1 bis 6 ermöglicht.

8. System nach Anspruch 7, bei welchem mindestens ein Gateway (141, 142, 143, 144, 145) über einen Datenbus mit dem Steuergerät (113a, 113b, 113c, 113d), dem es zugeordnet ist, verbunden ist.

9. System nach Anspruch 7, bei welchem mindestens ein Gateway (141, 142, 143, 144) in Vermittlung mindestens eines Routers (131, 132, 133, 134) mit dem Steuergerät (113a, 113b, 113c, 113d), dem es zugeordnet ist, verbunden ist.

10. Verfahren nach Anspruch 1, bei welchem die Meldung der Stufe 2, welche durch das erste Steuergerät an das erste Gateway übertragen wird, eine Meldung vom Typ GARP ist.

## Claims

1. A method for guaranteeing continuity of communications operated from a fourth-generation mobile terminal (151, 152) connected to a radio network (110) provided with several base stations (111) with which said terminal (151, 152) is able to communicate, wherein one base station (111a) is affiliated to a controller (113a) from among several controllers (113a, 113b, 113c, 113d) linking said radio network (110) to an interconnection network (120) comprising routers (131, 132, 133, 134, 135) operating at the IP layer level, wherein at least one controller is connected to at least one gateway configured to encapsulate in IP packets all the IP packets arising from the radio network before broadcasting them over the interconnection network, said gateways (141, 142, 143, 144, 145) being accessible through at least two different IP addresses, a first IP address being known to the nodes (111) of the radio network (110), a second IP address being known to the nodes (131, 132, 133, 134, 135) of the interconnection network (120),
and in that, when a first mobile terminal (151) connects to a first base station (111a) affiliated to a first controller (113a) to which said first mobile terminal was not affiliated previously, it comprises the following steps:
• said first controller (113a) transmits a level-2 message comprising at least the IP address of the first mobile terminal (151) to a first gateway (141);
• said first gateway (141) creates, at the level of the IP layer, a message comprising the IP address of said first mobile terminal (151) and said second IP address of said first gateway (141) in the interconnection network (120);
• said IP message is broadcasted by said first gateway (141) to destination gateways (142, 143, 144) associated with the other controllers (113b, 113c, 113d), wherein each of said destination gateways stores a correspondence between the IP address of the first mobile terminal (151) and said second IP address of said first emitting gateway (141) that is associated with the first controller (113a) to which the first mobile terminal (151) is affiliated;
and in that the IP packets arising from one controller (113a) are systematically transmitted to the gateway (141) to which it is associated, said gateway encapsulating said IP packets into other IP packets whose destination IP address is the second address of a destination gateway.

2. The method according to claim 1, wherein each controller (113a, 113b, 113c, 113d) is connected to a gateway (141, 142, 143, 144, 145) that is dedicated to this controller.

3. The method according to claim 2, wherein each gateway (141) is connected to the controller (113a) at which it is located by way of at least one IP router (131) included in the interconnection network (120), said router (131) being configured to systematically guide all the IP packets or level-2 messages to said gateway (141), prior to their encapsulation and broadcasting in the interconnection network (120).

4. The method according to any one of the preceding claims, wherein after the encapsulation step, all the packets arising from a first gateway (141) connected to a first controller (113a) travel via the interconnection network (120) and are then transmitted to a second gateway (142) connected to a second controller (113b), this second gateway (142) removing the IP capsule added to the IP packets by the first gateway before transmitting said IP packets to the second controller (113b).

5. The method according to any one of the preceding claims, wherein the first IP address known to the nodes (111) of the radio network (110) is the same for all the gateways.

6. The method according to any one of the preceding claims, wherein, when a router (121) sends an ARP request to the interconnection network (120), the first router (135) of the interconnection network (120) receiving said request transmits it to a gateway (145), said gateway transmitting a response to said router (121), the response comprising the level-2 address of said gateway (145).

7. System for guaranteeing the continuity of the communications operated from a fourth-generation mobile terminal (151,152) connected to a radio network (110) provided with several base stations (111) with which said terminal (151, 152) is able to communicate, wherein one base station (111a) is affiliated to a controller (113a) from among several controllers (113a, 113b, 113c, 113d) linking said radio network (110) to an interconnection network (120) comprising routers (131, 132, 133, 134, 135) operating at the IP layer level, wherein at least one controller (113a, 113b, 113c, 113d) is connected to at least one gateway (141, 142, 143, 144) configured to encapsulate in IP packets all the IP packets arising from the radio network (110) before broadcasting them over the interconnection network (120), said system allowing the implementation of the method according to any one of claims 1 to 6.

8. The system according to claim 7, wherein at least one gateway (141, 142, 143, 144) is connected via a data bus to the controller (113a, 113b, 113c, 113d) with which it is associated.

9. The system according to claim 7, wherein at least one gateway (141, 142, 143, 144) is connected by way of at least one router (131, 132, 133, 134) to the controller (113a, 113b, 113c, 113d) with which it is associated.

10. The method according to claim 1, wherein said level-2 message transmitted by the first controller to the first gateway is a message of the GARP type.
